# EUROPEAN PATENT APPLICATION

(11) **EP 3 866 294 A1**
(43) Date of publication of application: **18.08.2021**
(21) Application number: 20157082.7
(22) Date of filing: 13.02.2020
(51) Int. Cl.: H02J 7/00, B60L 53/10, B60L 53/53, B60L 53/57

(54) **A PORTABLE RESCUE POWER BANK**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: ISAKSSON, Björn, 431 41 Mölndal (SE)
(74) Representative: Zacco Sweden AB

(57) **Abstract**

A portable rescue power bank (10) for an electric vehicle. The portable rescue power bank (10) comprises an electrical energy storage (20), a first bidirectional DC/DC converter (21) having a first side connected to the electrical energy storage (20) and a second side connected to a high-voltage electrical connector (11) that is suitable for being connected to a corresponding high-voltage electrical connector (8) of the electric vehicle (1), a second bidirectional DC/DC converter (22) having a first side connected to the electrical energy storage (20) and a second side connected to a low-voltage electrical connector (12) that is suitable for being connected to a corresponding low-voltage electrical connector (9) of the electric vehicle (1), and an electronic control unit (23) configured for controlling operation of the first and second bidirectional DC/DC converters (21, 22). The disclosure also relates to an electric vehicle (1) suitable for being connected to a portable rescue power bank (10), as well as a method for using a portable rescue power bank (10).

## Description

### TECHNICAL FIELD

The present disclosure relates to portable rescue power bank, a method for using a portable rescue power bank, as well as an electric vehicle comprising a high-voltage battery.

Although the portable rescue power bank and associated method will be described in relation to a car the disclosure is not restricted to this particular type of vehicle, but may alternatively be installed or implemented in other types of vehicles, such as trucks, buses, agriculture vehicles, working vehicles, forest vehicles, marine vessels, motorcycles, rail vehicles, flying vehicles, or the like.

### BACKGROUND

In the field of electric vehicles, it may sometimes be difficult to easily assist and help a driver having a vehicle breakdown. It is known from for example document DE 20 2017 003 208 U1 to provide a power-bank with a cable and connector suitable for charging an electric vehicle in case of depleted electrical battery. However, despite the activities in the field, there is still a demand for a further improved solution for handling and solving an electrical vehicle breakdown, in particular in terms of flexibility and user-friendliness.

### SUMMARY

An object of the present disclosure is to provide a portable rescue power bank, and associated method, where the previously mentioned problem are avoided. This object is at least partly achieved by the features of the independent claims. According to a first aspect of the present disclosure, there is provided a portable rescue power bank for an electric vehicle. The portable rescue power bank comprises an electrical energy storage, a first bidirectional DC/DC converter having a first side connected to the electrical energy storage and a second side connected to a high-voltage electrical connector that is suitable for being connected to a corresponding high-voltage electrical connector of the electric vehicle, a second bidirectional DC/DC converter having a first side connected to the electrical energy storage and a second side connected to a low-voltage electrical connector that is suitable for being connected to a corresponding low-voltage electrical connector of the electric vehicle, and an electronic control unit configured for controlling operation of the first and second bidirectional DC/DC converters.

According to a second aspect of the present disclosure, there is provided a method for using a portable rescue power bank. The method comprises the steps of connecting a high-voltage electrical connector of the portable rescue power bank to a corresponding high-voltage electrical connector of an electric vehicle, and connecting a low-voltage electrical connector of the portable rescue power bank to a corresponding low-voltage electrical connector of the electric vehicle, wherein the high-voltage electrical connector and the low-voltage electrical connector are different from a main charging connector of the electric vehicle, obtaining information about a current operating status of a high-voltage battery or a high-voltage bus associated with the high-voltage battery, and about a current operating status of a low-voltage battery or a low-voltage bus associated with the low-voltage battery, and controlling operation of a first and/or a second bidirectional DC/DC converter of the portable rescue power bank, while taking into account the obtained information about a current operating status of the high-voltage battery or high-voltage bus, and/or the low-voltage battery or the low-voltage bus, for routing electrical power from an electrical energy storage of the portable rescue power bank to any of the high-voltage battery, high-voltage bus, low-voltage bus, low-voltage battery or a vehicle electrical propulsion motor, for providing a drivable electric vehicle and/or a vehicle driving range extension.

According to a third aspect of the present disclosure, there is provided an electric vehicle comprising: a high-voltage battery for vehicle propulsion and a main charging connector accessible from the outside of the vehicle and configured for charging of the high-voltage battery, a low voltage battery for powering a vehicle safety function, a high-voltage electrical connector connected with the high-voltage battery or a high-voltage bus associated with the high-voltage battery, wherein the high-voltage electrical connector is configured for being connected with a portable rescue power bank, and a low-voltage electrical connector connected to the low voltage battery or a low-voltage bus associated with the low-voltage battery, wherein also the low-voltage electrical connector is configured for being connected with the portable rescue power bank.

In this way, providing assistance for handling and solving an electrical vehicle breakdown is greatly simplified, because the portable rescue power bank is highly flexible terms of compatibility with various types of drive train voltage levels, and can handle various types of problems, such as for example depleted high-voltage battery, depleted low-voltage battery, malfunctioning vehicle DC/DC converter, blown fuses, opened main contactors, all mainly automatically and without user interaction.

Further advantages are achieved by implementing one or several of the features of the dependent claims.

In some example embodiments, the portable rescue power bank further comprises a wireless transceiver module, or a wired data communication connector, connected to the electronic control unit, wherein the electronic control unit is configured for establishing a data communication channel with the electric vehicle via said wireless transceiver module or wired data communication connector. Thereby, relevant information about the current operating status of the electrical powertrain of the vehicle can be obtained, such that suitable counter-measures may be initiated by the portable rescue power bank for making the vehicle drivable again, or for accomplishing a desired range-extension.

In some example embodiments, the electronic control unit is configured for obtaining information about a current operating status of a high-voltage battery or high-voltage bus, and/or a low-voltage battery or low-voltage bus of the electric vehicle, and controlling operation of the first and/or the second bidirectional DC/DC converter of the portable rescue power bank, while taking into account the obtained information about a current operating status of the high-voltage battery or high-voltage bus, and/or the low-voltage battery or the low-voltage bus, for routing electrical power from the electrical energy storage of the portable rescue power bank to any of the high-voltage battery, high-voltage bus, low-voltage bus, low-voltage battery or a vehicle electrical propulsion motor of the electric vehicle for providing a drivable electric vehicle and/or a vehicle driving range extension. By first obtaining relevant information about the electrical drive train and subsequently applying a suitable control strategy of the first and second DC/DC converters, a more efficient solution for overcoming the cause of the vehicle breakdown may be accomplished, and the portable rescue power bank may also adapt to the electrical drive train specification of each specific vehicle brand and type, thereby improving compatibility.

In some example embodiments, the first bidirectional DC/DC converter is configured for providing variable output voltage level at the second side, specifically within a range of 48 - 1500 Volt, specifically within a range of 350 - 1200 Volt. Thereby, the portable rescue power bank can adapt to a large range of different electrical drive train specifications, thereby improving compatibility.

In some example embodiments, also the second bidirectional DC/DC converter is configured for providing variable output voltage level at the second side, specifically within a range of 10 - 59 Volt, more specifically within a range of 12 - 32 Volt, and still more specifically within a range of 12 - 16 Volt. Thereby, the portable rescue power bank can adapt to a large range of different electrical drive train specifications, thereby improving compatibility.

In some example embodiments, the high-voltage electrical connector and low-voltage electrical connector are separate and individual electrical connectors.

In some example embodiments, the high-voltage electrical connector and low-voltage electrical connector are integrated in a single electrical connector. Thereby, connection of the portable rescue power bank to the vehicle may be simplified.

In some example embodiments, the electrical energy storage of the portable rescue power bank has a voltage level within a range of 12 - 59 Volt, specifically within a range of 12 - 48 Volt, and more specifically within a range of 12 - 24 Volt. Thereby, the portable rescue power bank can adapt to a large range of different electrical drive train specifications, thereby improving compatibility.

In some example embodiments, the portable rescue power bank further comprises a housing for holding and protecting the components of the portable rescue power bank against external influences, wherein the housing has a carrying handle for enabling simplified transportation handling by a user.

In some example embodiments, both the high-voltage electrical connector and the low-voltage electrical connector of the vehicle are located in a luggage compartment of the vehicle. Thereby, the portable rescue power bank may be easily installed and connected with the vehicle, and the luggage compartment generally also provides safe storage of the portable rescue power bank during vehicle travel, for example by means of a suitable cargo straps.

In some example embodiments, the vehicle further comprises a DC/DC converter connecting the high-voltage bus with the low-voltage bus, a power converter connected to the high-voltage bus and to an electrical propulsion motor of a vehicle power train, main electrical contactors located in the high-voltage bus between the high-voltage battery and the power converter, wherein the high-voltage electrical connector is connected to the high-voltage bus between the main electrical contactors and the power converter.

In some example embodiments, the method step of controlling operation of the first and/or second bidirectional DC/DC converter for providing a drivable electric vehicle and/or a vehicle driving range extension, while taking into account the obtained information about a current operating status of the high-voltage battery or high-voltage bus, and/or the low-voltage battery or the low-voltage bus, involves: when the obtained information about the operating status of the high-voltage battery or high-voltage bus indicates insufficient voltage level for driving the electric vehicle or a state of charge of the high-voltage battery below a threshold value, controlling operation of the first bidirectional DC/DC converter for providing an output voltage level sufficient for driving the electric vehicle, and/or when the obtained information about the operating status of the low-voltage battery or low-voltage bus indicates insufficient voltage level for operating a vehicle safety function, controlling operation of the second bidirectional DC/DC converter for providing an output voltage level sufficient for operating said vehicle safety function. In other words, the first and/or second bidirectional DC/DC converters are controlled taking into account the specific circumstances, thereby providing a flexible and adaptable approach.

In some example embodiments, the method step of controlling operation of the first bidirectional DC/DC converter for routing electrical power from an electrical energy storage of the portable rescue power bank to any of the high-voltage battery, high-voltage bus, or a vehicle electrical propulsion motor additionally involves controlling operation of the second bidirectional DC/DC converter for routing electrical power from the low-voltage battery to the electrical energy storage and/or an input side of the first bidirectional DC/DC converter, and/or wherein the step of controlling operation of the second bidirectional DC/DC converter for routing electrical power from the electrical energy storage of the portable rescue power bank to any of the low-voltage bus or low-voltage battery additionally involves controlling operation of the first bidirectional DC/DC converter for routing electrical power from the high-voltage battery to the electrical energy storage and/or an input side of the second bidirectional DC/DC converter. In other words, electrical energy available in one of the high-voltage and low-voltage battery of the vehicle may be routed through the portable rescue power bank to the other of the high-voltage and low-voltage battery, together with electric energy from the electrical energy storage. Thereby, the total supply capacity of the portable rescue power bank is increased.

In some example embodiments, the method may comprise the step of routing electrical energy generated by the propulsion motor when being operating in a regeneration mode to the electrical energy storage of the portable rescue power bank via the first bidirectional DC/DC converter. This may be advantageous when regenerated energy for any reason cannot be used for charging of the high-voltage battery, for example due to failure, overheating, fully charged, etc.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The disclosure will be described in detail in the following, with reference to the attached drawings, in which
- Fig. 1: shows schematically a side view of a vehicle configured for receiving a portable rescue power bank,
- Fig. 2: shows schematically a 3D view of an example embodiment of the portable rescue power bank,
- Fig. 3: shows schematically an example embodiment of a circuit layout of the portable rescue power bank,
- Fig. 4: shows schematically an example embodiment of a circuit layout of a vehicle drive train having the portable rescue power bank connected thereto,
- Fig. 5: shows schematically an alternative example embodiment of a circuit layout of the portable rescue power bank, and
- Fig. 6: shows schematically the basic steps of a method for using the portable rescue power bank according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

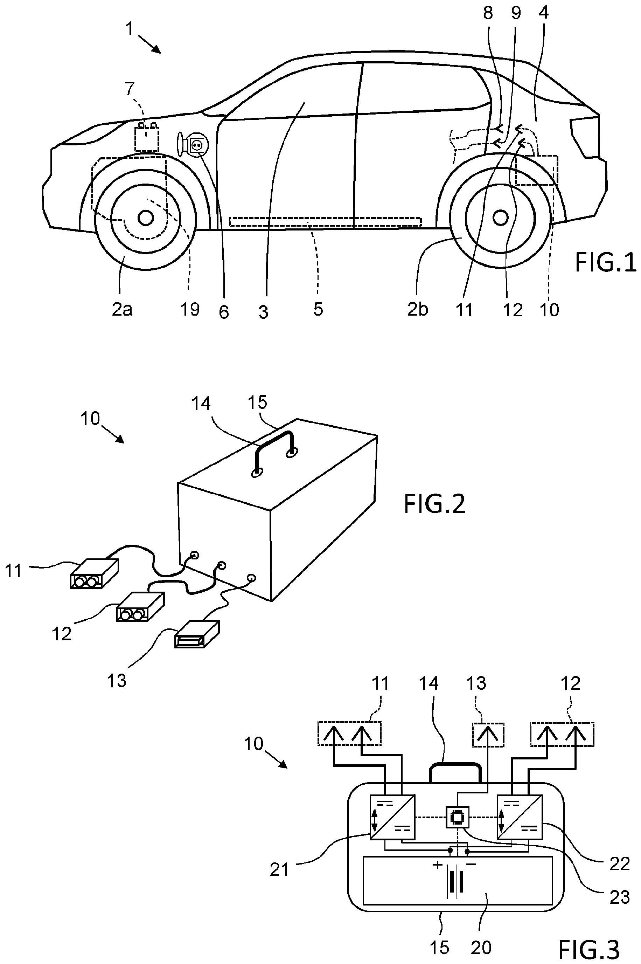

Figure 1 schematically shows a side-view of an example embodiment of an electrical vehicle 1 having front wheels 2a, rear wheels 2b, and a passenger compartment 3, luggage compartment 4 and an electrical propulsion motor 19, such as a single-phase or multi-phase AC motor or a DC motor.

The electric vehicle 1 further comprises a high-voltage battery 5 for vehicle propulsion and a main charging connector 6 accessible from the outside of the vehicle 1 and configured for charging of the high-voltage battery 5, a low voltage battery 7 for powering a vehicle safety function, a high-voltage electrical connector 8 connected with the high-voltage battery 5 or a high-voltage bus associated with the high-voltage battery 5, wherein the high-voltage electrical connector 8 is configured for being connected with the portable rescue power bank 10, and a low-voltage electrical connector 9 connected to the low voltage battery 7 or a low-voltage bus associated with the low-voltage battery 7, wherein also the low-voltage electrical connector 9 is configured for being connected with the portable rescue power bank 10.

In figure 1, the portable rescue power bank 10 with associated high-voltage electrical connector 11 and low-voltage electrical connector 12 is located in the luggage compartment 4, but in disconnected state. Clearly, the location of the high-voltage and low-voltage electrical connectors 8, 9 within the vehicle is not restricted to the luggage compartment 4 but may be varied, depending on the specific circumstances, for enabling easy connection with, and space for storing of, the portable rescue power bank 10, during driving of the vehicle.

In other words, in some example embodiments, the high-voltage and low voltage electrical connectors 8, 9 are available in the luggage comportment of the vehicle. However, depending on the size of the portable rescue power bank 10, the high-voltage and low voltage electrical connectors 8, 9 may be located for example under the seat of a vehicle, or at another storage area of the vehicle 1, where the portable rescue power bank 10 may be safely stored during driving of the vehicle 1.

By means of the high-voltage and low voltage electrical connectors 8, 9 of the vehicle 1, the portable rescue power bank 10 can easily be installed and electrically connected with the vehicle for providing various types of assistance, such as providing electrical energy for vehicle propulsion, or for charging of the high-voltage battery 5 and/or low voltage battery 7 of the vehicle 1.

The high-voltage battery 5 may be a lithium-ion battery, a lithium-sulphur battery or a solid-state battery, or the like. The high-voltage battery 5 may for example have a rated voltage level in the range of 100V - 1500V. The battery capacity in terms of kWh depends on factors such as whether the vehicle is a hybrid vehicle having an additional power source, such as a combustion engine, or whether the vehicle is a pure electric vehicle, and the desired operating range, etc. The capacity may for example be about 10 -150 kWh.

However, in certain applications of so called "mild hybrid" systems, the high voltage battery 5 may have for example merely in the range of 24V - 59V, in particular 24V or 48V.

The low voltage battery 7 for powering a vehicle safety function has always a lower rated voltage level than the high voltage battery 5. The low voltage battery 7 may have a rated voltage in the range of 6 - 24V, and specifically 12V.

The term "vehicle safety function" herein refers to a certain vehicle functions that are relevant for enabling safe operation of the vehicle during driving, such as vehicle steering and vehicle braking, but possibly also vehicle external lighting, vehicle data communication with for example emergency centre and/or a fleet manager, sensor devices for enabling autonomous driving, such as cameras, radars, LIDARs, or the like.

The main charging connector 6 accessible from the outside of the vehicle 1 may for example be of any standardised type, i.e. in line with standards such as for example IEC 62196, EN 62196, or SAE J1772.

The high-voltage electrical connector 8 may be a separate connector, or integrated into a combination connector including also the low-voltage electrical connector 9. Each of the high-voltage and low-voltage electrical connectors 8, 9 include at least two poles, i.e. at least DC plus and minus poles.

A schematic 3D view of an example embodiment of the portable rescue power bank for an electric vehicle is shown in figure 2. The portable rescue power bank 10 may have a housing 15 in form of a box or any shape, and external high-voltage and low-voltage electrical connectors 11, 12 for easy and fast electrical connection with the corresponding high-voltage and low-voltage electrical connectors 8, 9 of the vehicle 1. The portable rescue power bank 10 may further have a data communication connector 13 for establishing a data communication channel with the electric vehicle, and the vehicle 1 must then have a corresponding data communication connector. Alternatively, the portable rescue power bank 10 may include a transceiver for establishing a wireless data communication channel with the electric vehicle 1.

As mentioned above, the external high-voltage and low-voltage electrical connectors 11, 12 may be separate parts, as illustrated in figure 2, or combined into a single combination connector, possibly including also the data communication connector 13.

The portable rescue power bank 10 may be provided with a carrying handle 14 for simplifying manual transportation and carrying of the portable rescue power bank 10. One example scenario of use of the portable rescue power bank 10 may occur when an electrical vehicle has a breakdown and stops operating and the driver or vehicle alerts need for assistance. A nearby roadside assistance may then send an assistance vehicle to the broken vehicle and upon arrival a user may simply take a charged portable rescue power bank 10 from the assistance vehicle and install it in the broken vehicle, as illustrated in figure 1, but with high-voltage and low-voltage electrical connectors 11, 12 of the portable rescue power bank 10 connected with the high-voltage and low-voltage electrical connectors 8,9 of the broken vehicle 1.

Thereafter, the portable rescue power bank 10 may perform an evaluation of the electrical drivetrain of the electrical vehicle, and subsequently supply a suitable output voltage at each of the high-voltage and low-voltage electrical connectors 11, 12 of the portable rescue power bank 10, thereby in many cases making the vehicle 1 drivable again.

Figure 3 schematically shows an example embodiment of an electric circuit layout of the portable rescue power bank 10. The portable rescue power bank comprises an electrical energy storage 20, a first bidirectional DC/DC converter 21 having a first side connected to the electrical energy storage 20 and a second side connected to the high-voltage electrical connector 11 that is suitable for being connected to the corresponding high-voltage electrical connector 8 of the electric vehicle, and a second bidirectional DC/DC converter 22 having a first side connected to the electrical energy storage 20 and a second side connected to the low-voltage electrical connector 12 that is suitable for being connected to the corresponding low-voltage electrical connector 9 of the electric vehicle 1. The portable rescue power bank further comprises an electronic control unit 23 configured for controlling operation of the first and second bidirectional DC/DC converters 21, 22 and for data communication with the electric vehicle.

In the example embodiment of figure 3, the portable rescue power bank 10 comprises a dedicated wired data communication connector 13 for establishing said data communication with the electric vehicle, but the portable rescue power bank 10 may alternative comprise a wireless transceiver module connected to the electronic control unit 23 and configured for enabling the data communication with the electric vehicle. The electrical energy storage 20 of the portable rescue power bank 10 is typically a battery, such as a lithium-ion battery, a lithium-sulphur battery or a solid-state battery, or the like. Alternatively, the electrical energy storage 20 may be for example a hybrid battery/capacitor energy storage, or the like. The rated voltage level and energy capacity in kWh of the electrical energy storage 20 may be selected in view of the specific circumstances and the intended use, while possibly avoiding an excessively heavy and bulky electrical energy storage 20. For example, the electrical energy storage 20 may have a weight in the range of 5 - 20 kg.

The rated output voltage level of the electrical energy storage 20 is preferably selected taking into account the desired voltage output levels of the high-voltage and low-voltage electrical connectors 11, 12, because this relationship strongly influence the required performance of the first and second bidirectional DC/DC converters 21, 22. For example, if the portable rescue power bank 10 is configured for delivering 12V at the low-voltage electrical connector 12 and about 400V at the high-voltage electrical connector 11 may for example be provided with an electrical energy storage 20 with a rated voltage level of about 100V, thereby enabling efficient DC/DC conversion to both 400V and 12V by the first and second bidirectional DC/DC converter 21, 22, respectively.

The first and second bidirectional DC/DC converters 21, 22 are for example switched isolated or non-isolated converters. Thereby, the electronic control unit 23 of the portable rescue power bank 10 may control the output voltage level of the high-voltage and low-voltage electrical connectors 11, 12.

Moreover, due to the bidirectional character of the first and second DC/DC converters 21, 22, the electrical energy of for example the high-voltage battery of the electrical vehicle 1 may be used for charging the low-voltage battery of the vehicle via the portable rescue power bank 10, or the electrical energy of for example the low-voltage battery of the electrical vehicle 1 may be used for charging the high-voltage battery of the vehicle, or for powering an electrical propulsion motor 19 of the vehicle, via the portable rescue power bank 10. In other words, the bidirectional character of the first and second DC/DC converters 21, 22 enables the portable rescue power bank 10 to function as bypass for transferring electrical energy between the vehicle high-voltage side and low-voltage side. Furthermore, electrical energy generated by the propulsion motor 19 may also be routed to the electrical energy storage 20 of the portable rescue power bank 10 when the vehicle operates in a regeneration mode, i.e. when the Counter Electromotive Force provided by the propulsion motor 19 is used for charging the electrical energy storage 20 of the portable rescue power bank 10.

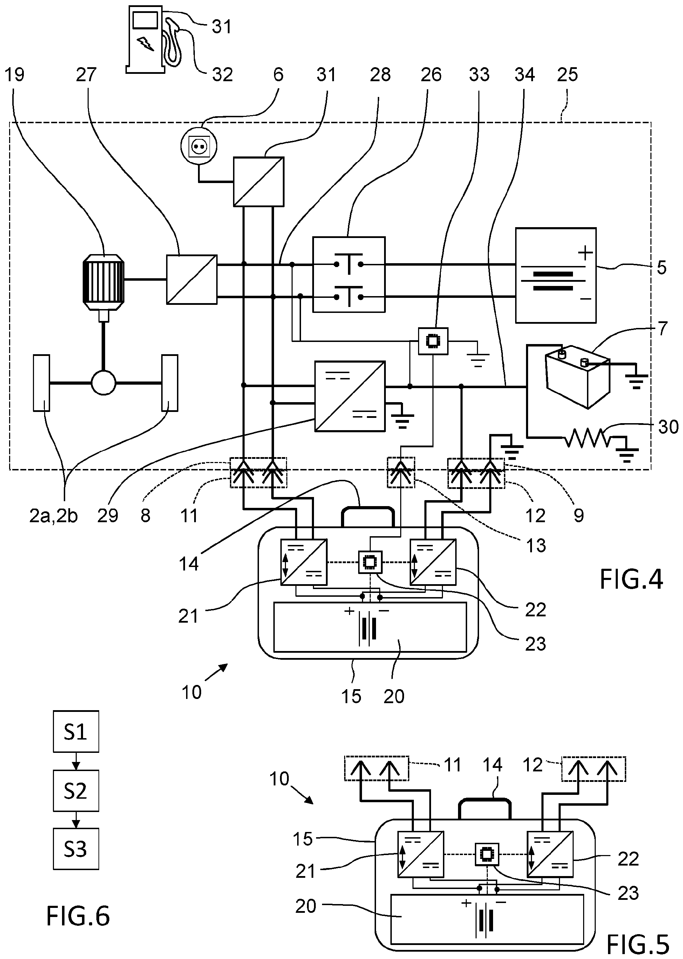

Figure 4 schematically shows an example embodiment of a layout of an electrical powertrain 25 of the electrical vehicle 1 having the portable rescue power bank 10 connected thereto. According to this example embodiment, the electrical powertrain 25 comprises a high-voltage battery 5, which is connected to an electrical propulsion motor 19 via main contactors 26 and an electric converter 27. A DC link connecting the main contactors 26 with the electric converter 27 is referred to as a high-voltage bus 28 herein.

The main contactors 26 are closed during normal operation of the electrical vehicle 1, and main contactor's function is to open and thus disconnect the high-voltage battery 5 from the high-voltage bus 28 under a potential short-circuit for ensuring vehicle and passenger safety.

The electric converter 27 converts the DC supplied by the high-voltage battery 5 to an appropriate voltage level and/or frequency before supplying it to the electrical propulsion motor 19. The electric converter 27 may for example be an electrical inverter.

An output shaft of the electrical propulsion motor 19 is drivingly connected to a transmission shaft, which is drivingly connected to the driving wheels, such as the front and/or rear wheels 2a, 2b.

In the example embodiment of figure 4, the electrical powertrain 25 further comprises a low-voltage battery 7, which is connected to the high-voltage battery 7 via a DC/DC converter 29, or specifically, connected to the high-voltage bus 28 via the DC/DC converter 29. Thereby, electrical energy from the high-voltage battery 5 may be used for charging the low-voltage battery 7 if needed, or oppositely. The DC link connecting the low-voltage battery 7 with the DC/DC converter 29 is referred to as the low-voltage bus 34 herein.

In some example embodiments, the vehicle drive train does not include a further propulsion motor, such as a combustion engine, and the vehicle drive train relies on electrical power from a relatively large capacity high-voltage battery for vehicle propulsion. In other example embodiments, such as mild hybrid drive trains or the like, the vehicle drive train has an additional propulsion motor, such as a combustion engine, in which case the vehicle drive train relies less on electrical power, and the capacity of the high-voltage battery may be smaller.

In any event, the low-voltage battery 7 is configured for powering at least one load 30 related to a vehicle safety function, such as an electrical steering actuator, or electrically actuated friction brakes, or an electrical motor powering a hydraulic pump for a hydraulic steering system and/or a hydraulic braking system. The load 30 related to a vehicle safety function may be connected to the low-voltage bus 34.

The drive train further comprises a main charging connector 6, which is accessible from the exterior of the vehicle 1 and arranged to be connected with a charging connector 32 of a stationary charging station 31. The main charging connector 6 is connected to the high-voltage bus via an electrical converter 31, such that charging of the high-voltage and/or low-voltage batteries 5, 7 is enabled during for example parking of the vehicle. The electrical converter 31 may be a DC/DC converter and/or an AC/DC converter, depending on the type of charging station 31.

In some example embodiments, the electrical drive train may comprise an electronic control unit 33 configured for data communication with the portable rescue power bank 10. The electronic control unit 33 of the drive train may obtain updated information on current voltage levels of for example the high-voltage bus 28, the high-voltage battery 5, the low-voltage bus 34, and/or the low-voltage battery 7, for example via suitable sensors or by calculations based on a detected relevant parameter, such as a current level.

The electronic control unit 23 of the portable rescue power bank 10 may be configured for first establishing a data communication channel between the electronic control unit 23 of the portable rescue power bank 10 and the electric vehicle 1, in particular the electronic control unit 33 of the electrical powertrain, and obtaining information about a current operating status of a high-voltage battery 5 or high-voltage bus 28, and/or a low-voltage battery 7 or low-voltage bus 34 of the electric vehicle 1 via said data communication channel.

According to an alternative example embodiment, the portable rescue power bank 10 may lack a dedicated data communication connector 13, or wireless transceiver module, for establishing a data communication channel with the electric vehicle 1, as schematically illustrated in figure 5. In such a scenario, the electronic control unit 23 of the portable rescue power bank 10 may simply be configured to obtain information about a current operating status by detecting the voltage levels available at the high-voltage and low-voltage connectors 8, 9 of the vehicle 1, thereby eliminating need for establishment of a communication channel between the portable rescue power bank 10 and vehicle.

With reference to all example embodiments of figures 1 - 5, the electronic control unit 23 of the portable rescue power bank 10 may be configured for automatically controlling operation of the first and/or the second bidirectional DC/DC converter 21, 22 of the portable rescue power bank 10, while taking into account the obtained information about a current operating status of the high-voltage battery 5 or high-voltage bus 28, and/or the low-voltage battery 7 or the low-voltage bus 34, such that appropriate levels of electrical power is routed from the electrical energy storage 20 of the portable rescue power bank 10 to any of the high-voltage battery 5, high-voltage bus 28, low-voltage bus 34, low-voltage battery 7 or the vehicle electrical propulsion motor 19 of the electric vehicle for providing a drivable electric vehicle and/or a vehicle driving range extension.

In other words, in the event of a vehicle breakdown, vehicle assistance staff may thus upon arrival at the location of the vehicle breakdown, first simply carry over a charged portable rescue power bank 10 to the stalled vehicle and connect it thereto via the high-voltage and low-voltage connectors 11, 12, as illustrated in figure 4. Thereafter, the portable rescue power bank 10 may collect relevant information about the stalled vehicle for identifying the problem for the breakdown, and applying a solution for at least temporarily providing a drivable vehicle.

The step of identifying the problem causing the breakdown and finding a suitable solution strategy for at least temporarily providing a drivable vehicle, based on collected relevant information about the stalled vehicle, may involve some kind of system analysis and problem identification process.

The system analysis and problem identification process may performed by the electronic control unit 23 of the portable rescue power bank 10 by executing software stored in a data memory of the portable rescue power bank 10. Alternatively, the portable rescue power bank 10 may forward the relevant data wirelessly to a remote server that performs the analysis and subsequently delivers an appropriate solution for solving the problem. As mentioned above, the solution involves control of the first and/or the second bidirectional DC/DC converter 21, 22 for accomplishing an appropriate level of electrical power being routed from/to the electrical energy storage 20 of the portable rescue power bank 10 via the first and/or the second bidirectional DC/DC converter 21, 22. The system analysis and problem identification process may then be repeatedly re-evaluated during the subsequent process for fixing the problem.

According to some example embodiments, the system analysis and problem identification process of the electrical powertrain performed by means of the portable rescue power bank 10, involves detection of the voltage levels available at the first and second electrical connectors 8, 9, i.e. at the high-voltage bus 28 and/or high voltage battery 5, and low voltage bus 34 or low voltage battery 7, and subsequent comparison of the first and second voltages with associated threshold values for determining the health and integrity of the electrical drive train 25. The associated threshold values may for example be obtained from the vehicle itself via the electronic control unit 23 of the portable rescue power bank 10 being in communicating with the electronic control unit 33 of the drive train. Alternatively, the associated threshold values may be obtained from a remote server.

For example, if the system analysis concludes that the high-voltage battery 5 has too low charge level or has a failure, or if a high-voltage fuse is blown, or if the main contactors 26 are set in an opened state and cannot be closed, the electrical energy stored in the electrical energy storage 20 of the portable rescue power bank 10 may be used for temporarily drive the electrical propulsion motor 19, and thus possibly providing a driving range sufficient for reaching a charging station 31. The electrical power of the low-voltage battery 7 may also be used in combination with the portable rescue power bank 10 during such a process for even further increasing the driving range.

Alternatively, if the system analysis concludes that the low-voltage battery 5 has too low charge level, such that the load 30 related to a vehicle safety function cannot be adequately operated, the electrical energy stored in the electrical energy storage 20 of the portable rescue power bank 10 may be used for temporarily operating said load 30 related to said vehicle safety function, such that the vehicle can be driven again. This scenario may be specifically relevant when for example the DC/DC converter 29 connecting the high-voltage and low-voltage batteries 5, 7 of the drive train is malfunctioning, because this would effectively hinder temporarily operating the load 30 related to said vehicle safety function by the high-voltage battery 5 via the DC/DC converter 29.

The portable rescue power bank 10 may alternatively, or in combination with any of the scenarios above, be used as a temporary or permanent range extender for the electrical vehicle. For example, if a user plans a longer trip, the user may before leaving install one, two or more charged portable rescue power bank(s) 10 in the vehicle for accomplishing a convenient range extension, thereby possibly avoiding need for intermediate charging stops along the driving route.

A further example may be when the available maximal driving range of the vehicle 1 is insufficient for enabling commuting to work, etc. This may frequently occur for hybrid vehicles due to their generally smaller battery capacity. In such case, the user may decide to have a portable rescue power bank 10 permanently installed for providing the range extension necessary for frictionless commuting to work, etc.

Thanks to the flexibility of the portable rescue power bank 10 in terms of vehicle drive train compatibility, i.e. in terms of the variable voltage levels that may be supplied at the high-voltage and low-voltage connectors 11, 12 of the portable rescue power bank 10, nearly any driver irrespective of vehicle brand or type may use the same type of portable rescue power bank 10, provided that the vehicle comprises compatible high-voltage and low-voltage connectors 8, 9. In other words, charged portable rescue power banks 10 may be held available for rent or buy to users at various locations, such as motorway and city vehicle service centres.

Further example details of the portable rescue power bank 10 are described below with reference to figures 1 - 5. As mentioned above, the first bidirectional DC/DC converter 21 may be configured for providing variable output voltage level at the second side of said converter 21. Specifically, the variable output voltage level at the second side of said converter 21 may vary within a range of 48 -1500 Volt, and more specifically within a range of 350 - 1200 Volt. Note that these values merely defines maximal limit values, and not necessarily the boundaries of voltage span that is actually deliverable at the second side of said converter 21, which voltage span typically is significantly narrower. In other words, in some example embodiments, the first DC/DC converter may have an actual variable output voltage ranging from 200 - 400 Volt.

Similarly, also the second bidirectional DC/DC converter 22 is configured for providing variable output voltage level at the second side. However, the second bidirectional DC/DC converter 22 is configured for providing variable output voltage level within a range of 10 - 59 Volt, more specifically within a range of 12 - 32 Volt, and still more specifically within a range of 12 - 16 Volt.

The first and second bidirectional DC/DC converters 21, 22 may have virtually any known topology, and may be selected depending on the specific circumstances and desired operating conditions. For example, one or both of the first and second bidirectional DC/DC converters 21, 22 may be a non-isolated bidirectional DC/DC converter, such as for example a bidirectional Buck-Boost DC/DC converter, Cascaded Bidirectional Buck-boost DC/DC Converter, Bidirectional CUK DC/DC Converter, Switched Capacitor Bidirectional DC/DC Converter, or the like. Alternatively, one or both of the first and second bidirectional DC/DC converters 21, 22 may be an isolated bidirectional converter, i.e. a converter with galvanic isolation between input and output side. Some examples of isolated bidirectional DC/DC converters are Dual Half Bridge Isolated Bidirectional DC/DC Converter and Dual Active Full Bridge Isolated Bidirectional DC/DC Converter.

The electrical energy storage of the portable rescue power bank has a voltage level within a range of 12 - 59 Volt, specifically within a range of 12 - 48 Volt, and more specifically within a range of 12 - 24 Volt. Thereby, the portable rescue power bank 10 may fulfil the 60 Volt limit defined by the Safety Extra Low Voltage (SELV) standard, depending on setup of the DC/DC converters.

According to the some example embodiments, the portable rescue power bank 10 comprises a housing 15 for holding and protecting the components of the portable rescue power bank against external influences, wherein the housing 15 has a carrying handle 14 for enabling simplified transportation handling of the portable rescue power bank 10 by a user.

The disclosure also relates to a method for using the portable rescue power bank 10, which method will be described below with reference to figure 6. The method comprises a first step S10 of connecting the high-voltage electrical connector 11 of the portable rescue power bank 10 to the corresponding high-voltage electrical connector 8 of the electric vehicle 1, and connecting the low-voltage electrical connector 12 of the portable rescue power bank 10 to the corresponding low-voltage electrical connector 9 of the electric vehicle 1, wherein the high-voltage electrical connector 8 and the low-voltage electrical connector 9 of the vehicle 1 are different from the main charging connector 6 of the electric vehicle. In other words, the vehicle comprises the high-voltage electrical connector 8, the low-voltage electrical connector 9 and the main charging connector 6.

The method further comprises a second step S20 of obtaining information about a current operating status of a high-voltage battery 5 or a high-voltage bus 28 associated with the high-voltage battery 5, and about a current operating status of a low-voltage battery 7 or a low-voltage bus 34 associated with the low-voltage battery 7. Said information may for example be obtained by establishing a communication channel between the electronic control unit 23 of the portable rescue power bank 10 and the electric vehicle 1, and subsequently collect relevant information from the vehicle. Alternatively, the electronic control unit 23 of the portable rescue power bank 10 may be configured to obtain information about a current operating status by detecting the voltage levels available at the high-voltage and low-voltage connectors 8, 9 of the vehicle 1.

The method then comprises a third step S30 of controlling operation of a first and/or a second bidirectional DC/DC converter 21, 21 of the portable rescue power bank 10, while taking into account the obtained information about a current operating status of the high-voltage battery 5 or high-voltage bus 28, and/or the low-voltage battery 7 or the low-voltage bus 34, for routing electrical power from then electrical energy storage 20 of the portable rescue power bank 10 to any of the high-voltage battery 5, high-voltage bus 28, low-voltage bus 34, low-voltage battery 7 or a vehicle electrical propulsion motor 19, for providing a drivable electric vehicle 1 and/or a vehicle driving range extension.

Said third step S30 of controlling operation of the first and/or second bidirectional DC/DC converter for providing a drivable electric vehicle and/or a vehicle driving range extension, while taking into account the obtained information about a current operating status of the high-voltage battery or high-voltage bus, and/or the low-voltage battery or the low-voltage bus, may in some example embodiments involve: controlling operation of the first bidirectional DC/DC converter for providing an output voltage level sufficient for driving the electric vehicle, when the obtained information about the operating status of the high-voltage battery or high-voltage bus indicates insufficient voltage level for driving the electric vehicle or a state of charge of the high-voltage battery below a threshold value.

Said third step S30 of controlling operation of the first and/or second bidirectional DC/DC converter for providing a drivable electric vehicle and/or a vehicle driving range extension, while taking into account the obtained information about a current operating status of the high-voltage battery or high-voltage bus, and/or the low-voltage battery or the low-voltage bus, may in some example embodiments involve controlling operation of the second bidirectional DC/DC converter for providing an output voltage level sufficient for operating said vehicle safety function, when the obtained information about the operating status of the low-voltage battery or low-voltage bus indicates insufficient voltage level for operating a vehicle safety function.

According to some example embodiments, the third step S30 of controlling operation of the first bidirectional DC/DC converter 21 for routing electrical power from an electrical energy storage 20 of the portable rescue power bank 10 to any of the high-voltage battery 5, high-voltage bus 28, or a vehicle electrical propulsion motor 19 may additionally involve controlling operation of the second bidirectional DC/DC converter 22 for routing electrical power from the low-voltage battery 7 to the electrical energy storage 20 and/or an input side of the first bidirectional DC/DC converter 21. Thereby, also the electrical energy of the low-voltage battery 7 may be used for improved supply to the high-voltage bus 28, thereby reducing the load on the electrical energy storage 20.

Similarly, the third step S30 may additionally involve controlling operation of the second bidirectional DC/DC converter for routing electrical power from the electrical energy storage of the portable rescue power bank to any of the low-voltage bus or low-voltage battery additionally involves controlling operation of the first bidirectional DC/DC converter for routing electrical power from the high-voltage battery to the electrical energy storage and/or an input side of the second bidirectional DC/DC converter. Thereby, also the electrical energy of the high-voltage battery 5 may be used for improved supply to the low-voltage bus 34, thereby reducing the load on the electrical energy storage 20.

The method may further include a step of routing electrical energy generated by the propulsion motor 19 when being operating in a regeneration mode to the electrical energy storage 20 of the portable rescue power bank 10 via the first bidirectional DC/DC converter 21. This may be particularly relevant in case electrical energy generated by the propulsion motor 19 cannot be routed to the high-voltage battery 5 for any reason.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Although discussed above as methods described by the flowchart of figure 5, it should be appreciated that one or more steps possibly may be performed in a slightly modified order. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

## Claims

1. A portable rescue power bank (10) for an electric vehicle, wherein the portable rescue power bank (10) comprises an electrical energy storage (20),
**characterized in that** portable rescue power bank (10) further comprises:
a first bidirectional DC/DC converter (21) having a first side connected to the electrical energy storage (20) and a second side connected to a high-voltage electrical connector (11) that is suitable for being connected to a corresponding high-voltage electrical connector (8) of the electric vehicle (1),
a second bidirectional DC/DC converter (22) having a first side connected to the electrical energy storage (20) and a second side connected to a low-voltage electrical connector (12) that is suitable for being connected to a corresponding low-voltage electrical connector (9) of the electric vehicle (1), and
an electronic control unit (23) configured for controlling operation of the first and second bidirectional DC/DC converters (21, 22).

2. The portable rescue power bank (10) according to claim 1, further comprising a wireless transceiver module, or a wired data communication connector (13), connected to the electronic control unit (23), wherein the electronic control unit (23) is configured for establishing a data communication channel with the electric vehicle (1) via said wireless transceiver module or wired data communication connector (13).

3. The portable rescue power bank (10) according to claim 1 or claim 2, wherein the electronic control unit (23) is configured for:
obtaining information about a current operating status of a high-voltage battery (5) or high-voltage bus (28), and/or a low-voltage battery (7) or low-voltage bus (34) of the electric vehicle (1),
controlling operation of the first and/or the second bidirectional DC/DC converter (21, 22) of the portable rescue power bank (10), while taking into account the obtained information about a current operating status of the high-voltage battery (5) or high-voltage bus (28), and/or the low-voltage battery (7) or the low-voltage bus (34), for routing electrical power from the electrical energy storage (20) of the portable rescue power bank (10) to any of the high-voltage battery (5), high-voltage bus (28), low-voltage bus (34), low-voltage battery (7) or a vehicle electrical propulsion motor (19) of the electric vehicle for providing a drivable electric vehicle and/or a vehicle driving range extension.

4. The portable rescue power bank (10) according to any of the preceding claims, wherein the first bidirectional DC/DC converter (21) is configured for providing variable output voltage level at the second side, specifically within a range of 48 - 1500 Volt, and more specifically within a range of 350 - 1200 Volt.

5. The portable rescue power bank (10) according to claim 4, wherein also the second bidirectional DC/DC converter (22) is configured for providing variable output voltage level at the second side, specifically within a range of 10 - 59 Volt, more specifically within a range of 12 - 32 Volt, and still more specifically within a range of 12 - 16 Volt.

6. The portable rescue power bank (10) according to any of the preceding claims,
wherein the high-voltage electrical connector (11) and low-voltage electrical connector (12) are separate and individual electrical connectors, or
wherein the high-voltage electrical connector (11) and low-voltage electrical connector (12) are integrated in a single electrical connector.

7. The portable rescue power bank (10) according to any of the preceding claims, wherein the electrical energy storage (20) of the portable rescue power bank (10) has a voltage level within a range of 12 - 59 Volt, specifically within a range of 12 - 48 Volt, and more specifically within a range of 12 - 24 Volt.

8. The portable rescue power bank (10) according to any of the preceding claims, further comprising a housing (15) for holding and protecting the components of the portable rescue power bank (10) against external influences, wherein the housing (15) has a carrying handle (14) for enabling simplified transportation handling by a user.

9. An electric vehicle (1) comprising:
a high-voltage battery (5) for vehicle propulsion and a main charging connector (6) accessible from the outside of the vehicle and configured for charging of the high-voltage battery (5),
a low-voltage battery (7) for powering a vehicle safety function,
a high-voltage electrical connector (8) connected with the high-voltage battery (5) or a high-voltage bus (28) associated with the high-voltage battery (5), wherein the high-voltage electrical connector (8) is configured for being connected with a portable rescue power bank (10), and
a low-voltage electrical connector (9) connected to the low-voltage battery (7) or a low-voltage bus (34) associated with the low-voltage battery (7), wherein also the low-voltage electrical connector (9) is configured for being connected with the portable rescue power bank (10).

10. The electric vehicle according to claim 9, wherein both the high-voltage electrical connector (8) and the low-voltage electrical connector (9) are located in a luggage compartment of the vehicle (1).

11. The electric vehicle according to claim 9 or claim 10, further comprising
a DC/DC converter (29) connecting the high-voltage bus (28) with the low-voltage bus (34),
a power converter (27) connected to the high-voltage bus (28) and to an electrical propulsion motor (19) of a vehicle power train,
main electrical contactors (26) located in the high-voltage bus (28) between the high-voltage battery (5) and the power converter (27),
wherein the high-voltage electrical connector (8) is connected to the high-voltage bus (28) between the main electrical contactors (26) and the power converter (27).

12. A method for using a portable rescue power bank (10) comprising:
connecting a high-voltage electrical connector (11) of the portable rescue power bank (10) to a corresponding high-voltage electrical connector (8) of an electric vehicle (1), and connecting a low-voltage electrical connector (12) of the portable rescue power bank (10) to a corresponding low-voltage electrical connector (9) of the electric vehicle (1), wherein the high-voltage electrical connector (11) and the low-voltage electrical connector (12) are different from a main charging connector (6) of the electric vehicle (1),
obtaining information about a current operating status of a high-voltage battery (5) or a high-voltage bus (28) associated with the high-voltage battery (5), and about a current operating status of a low-voltage battery (7) or a low-voltage bus (34) associated with the low-voltage battery (7), and
controlling operation of a first and/or a second bidirectional DC/DC converter (21, 22) of the portable rescue power bank (10), while taking into account the obtained information about a current operating status of the high-voltage battery (5) or high-voltage bus (28), and/or the low-voltage battery (7) or the low-voltage bus (34), for routing electrical power from an electrical energy storage (20) of the portable rescue power bank (10) to any of the high-voltage battery (5), high-voltage bus (28), low-voltage bus (34), low-voltage battery (7) or a vehicle electrical propulsion motor, for providing a drivable electric vehicle and/or a vehicle driving range extension.

13. The method for using the portable rescue power bank (10) according to claim 12, wherein the step of controlling operation of the first and/or second bidirectional DC/DC converter (21, 22) for providing a drivable electric vehicle and/or a vehicle driving range extension, while taking into account the obtained information about a current operating status of the high-voltage battery (5) or high-voltage bus (28), and/or the low-voltage battery (7) or the low-voltage bus (34), involves:
when the obtained information about the operating status of the high-voltage battery (5) or high-voltage bus (28) indicates insufficient voltage level for driving the electric vehicle or a state of charge of the high-voltage battery (5) below a threshold value, controlling operation of the first bidirectional DC/DC converter (21) for providing an output voltage level sufficient for driving the electric vehicle, and/or
when the obtained information about the operating status of the low-voltage battery (7) or low-voltage bus (34) indicates insufficient voltage level for operating a vehicle safety function, controlling operation of the second bidirectional DC/DC converter (22) for providing an output voltage level sufficient for operating said vehicle safety function.

14. The method for using the portable rescue power bank (10) according to claim 12 or claim 13,
wherein the step of controlling operation of the first bidirectional DC/DC converter (21) for routing electrical power from an electrical energy storage (20) of the portable rescue power bank (10) to any of the high-voltage battery (5), high-voltage bus (28), or a vehicle electrical propulsion motor additionally involves controlling operation of the second bidirectional DC/DC converter (22) for routing electrical power from the low-voltage battery (7) to the electrical energy storage (20) and/or an input side of the first bidirectional DC/DC converter (21), and/or
wherein the step of controlling operation of the second bidirectional DC/DC converter (22) for routing electrical power from the electrical energy storage (20) of the portable rescue power bank (10) to any of the low-voltage bus (34) or low-voltage battery (7) additionally involves controlling operation of the first bidirectional DC/DC converter (21) for routing electrical power from the high-voltage battery (5) to the electrical energy storage (20) and/or an input side of the second bidirectional DC/DC converter (22).

15. The method for using the portable rescue power bank (10) according to any of the preceding claims 12 - 14, further comprising routing electrical energy generated by the propulsion motor (19) when being operated in a regeneration mode to the electrical energy storage (20) of the portable rescue power bank (10) via the first bidirectional DC/DC converter (21).
